Europäisches Patentamt

European Patent Office

Office européen des brevets

(19)

(11) Publication number: **0 504 816 A1**

## EUROPEAN PATENT APPLICATION

(12)

(21) Application number: **92104610.8**

(22) Date of filing: **17.03.92**

(51) Int. Cl.⁵: **G09G 3/36**, G02F 1/1347, G02F 1/1335

(30) Priority: **18.03.91 US 670790**

(43) Date of publication of application:
**23.09.92 Bulletin 92/39**

(84) Designated Contracting States:
**DE FR GB IT**

(71) Applicant: **Stalow, Michael**
**25, Hapoel Street NOF-YAM**
**Herzeliya 46105(IL)**
Applicant: **Hecht, Ilana**
**P.O. Box 215**
**Teaneck, N.J. 07666(US)**

(72) Inventor: **Stalow, Michael**
**25, Hapoel Street NOF-YAM**
**Herzeliya 46105(IL)**
Inventor: **Hecht, Ilana**
**P.O. Box 215**
**Teaneck, N.J. 07666(US)**

(74) Representative: **Heim, Hans-Karl, Dipl.-Ing. et al**
**c/o Weber & Heim Hofbrunnstrasse 36**
**W-8000 München 71(DE)**

(54) **A method to obtain grey scales and higher frame speed in liquid crystal displays, having steep slope of the electrooptical characteristic.**

(57) Liquid crystal displays like supertwisted type, having a very steep slope of the electrooptical curve, or even bistability, are distinguished by high contrast and allow also to realize high numbers of addressable rows, means they offer higher information content. Unfortunately, no grey scales of acceptable quality can be obtained. According to the present invention, the data voltages (a,b,c) of the image, are superposed by a high frequency voltage (Hf) of triangle form and together are applied to the electrodes of the liquid crystal display. This method allow to display images with high quality grey scales. To adopt the display for moving pictures, a new method of divisional addressing was found out. The new method allow to double the frame speed, or to double the number of the addressable rows for high definition displays.

FIG.1

EP 0 504 816 A1

Rank Xerox (UK) Business Services

## BACKGROUND OF THE INVENTION

Supertwisted liquid crystal displays are today frequently used, for their high contrast and high information content.

Because of their step slope of the voltage/light transmission curve, no acceptable gray scale can be realized.

Superposing the image voltages by a high frequency voltage, a most unexpected and no obvious effect was discovered. In spite that liquid crystal is rather slow, the high frequency voltage, have a great influence and like a catalyst, causes the display to show excellent grey scales.

Unfortunately, supertwisted liquid crystal is also slow and it is not suitable even for slow moving pictures.

To avoid this drawback, a new " DIVISIONAL " addressing method was found out.

## SUMMARY OF THE INVENTION

Comparatively slow switching time and difficulties in obtaining grey scales prevent supertwisted liquid crystal displays to be used in a number of possible fields of application.

The present invention solves both problems in a low cost manner, drawing it quality near to the very expensive active matrix displays.

## BRIEF DESCRIPTION OF THE DRAWINGS.

Fig. 1,
shows the light transmission dependence as a function of the applied voltage, for supertwisted liquid crystals with different twist angles.
Fig 2,
shows an exemplary schematic diagram of superposing a high frequency voltage on top of the data voltages.
Fig. 3,
explains how the superposed high frequency causes the grey scales to appear.
Fig. 4,
shows the form of the high frequency voltages with gamma correction for proper tonal rendition.
Fig. 5
shows the dependence of the decay time as a function of the high frequency superposed voltages.
Fig. 6 and Fig. 7,
illustrates the new divisional addressing method for higher frame speed.

## DESCRIPTION OF THE PREFERRED EMBODIMENTS

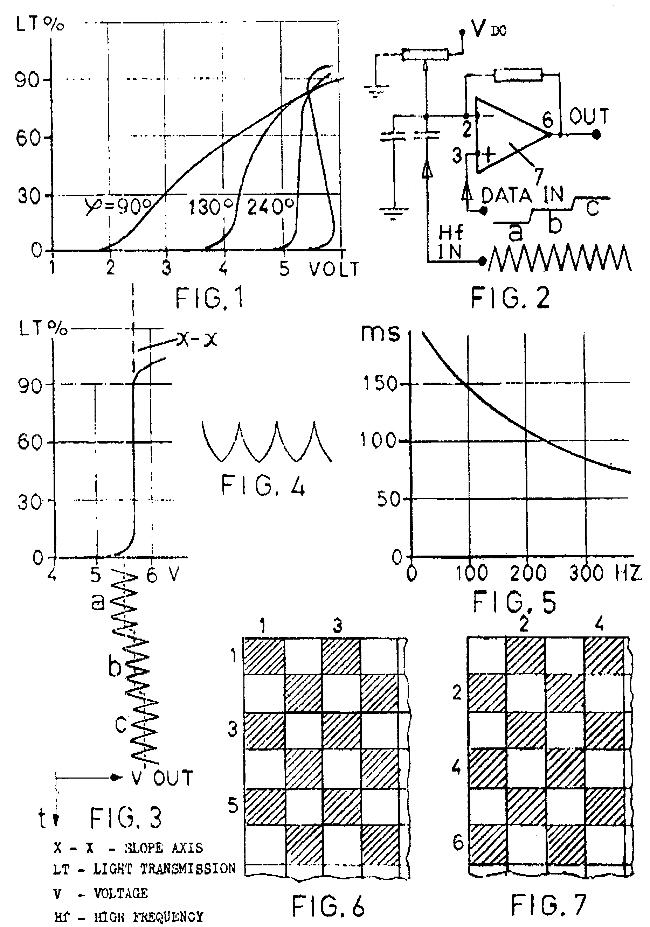

The exemplary embodiment of the device, which offers grey scale, using supertwisted liquid crystal material, is shown in fig. 2. Here is shown a regular input amplifier 7, which receive the data voltages of an image, at the noninverting input " 3 ( + ) ". The data voltages are here exemplified by three levels. Here " a " corresponds to a low light intensity, " b " illustrates a medium light intensity and " c " represents a high light intensity.

Let, take in consideration a supertwisted display having a twist angle somewhat between 240 degree and 270 degree. In this case the slope of the electrooptical characteristic will be very steep, causing to appear the images with very high contrast, but without any grey shades. The voltages of the " a " level will cause low light transmission and the voltages of the " c " level will lead to high light transmission. The voltages of the " b " level are in a no stable region of the electrooptical curve and it can join whether the low light transmission level or the high light transmission level.

So, no stable grey scales can be obtained.

It was discovered, that if a high frequency voltage " Hf " will be applied to the inverting input " 2 (-) ", of the amplifier 7, the display demonstrates unexpected grey shades of high quality.

It looks no obvious, how a liquid crystal, which is rather slow, responds to high frequency voltages and how the high frequency voltage of constant amplitude causes grey scale to appear.

To understand what happens, is necessary to review our US patent No. 4,368,963. In Fig. 3, of the drawings and description at column 3, lines 25 - 46 of the above patent. Here, was disclosed, that a liquid crystal display can be energized by voltages of high frequency.

The display does not respond to every single wave, but react according to the average energy of the high frequency .

Let now examine Fig. 3, of the present invention. Here is chosen from Fig. 1, an electrooptical curve of about 240 degree twist angle.

It is also shown here the output voltages at the pin 6, of the amplifier 7, of fig. 2, at the working voltage axis " X - " on Fig. 3. The output voltage of the amplifier 7, is a sum of the data voltages " a ", " b " and " c ", which is fed to the noninverting input " 3 ( + ) " and the high frequency voltage " Hf ", which is fed to the inverting input " 2 (-) ". The data voltages " a " , " b " and " c " , are now superposed by a high frequency voltage " Hf ".

Now, it looks to be understood, that during the time of the " a " data voltage, only a small part of the high frequency voltage is crossing the " X - " axis, causing an average short part of time to be light transmitting, what is seen as low brightness. At " c " voltage level, a large average part of the high frequency is crossing the " X - X " axis, causing a long part of time to be light transmitting, what is seen as high brightness.

Now, at " b " voltage level, the high frequency is on both sides of the axis " X - X " during a equal period of time. It is clear, that in the last case only a half of the brightness will be displayed and will be seen as a very stable half-tone.

It is also clear, that in this way every level of half tones will be automatically displayed, reflecting the really grey-scale of the data voltages of the image.

The display, which was a on/off device, became now an amplitude modulated. Amplitude modulated devices are sensitive to noises, particularly to interferences with other frequencies, which exist in the system, for example clock or synchronization frequencies. So it is necessary to choose a high frequency that will not create standing images of interfered frequencies. Instead of superposing the data with a high frequency, as shown in the drawing, a good result with very small noise level was obtained by using the data voltages to frequency modulating the applied high frequency.

A triangle form of the high frequency realize linear light modulating. With an exponential or invert-exponential form of the high frequency, as it is shown in Fig. 4, can be realized a " gamma " correction. The understanding of the new mechanism of the grey scale, allow to calculate the number of the grey scales.

Suppose, we have a 640 x 480 pixels display, means 240 rows per each half screen. Suppose also that the device displays 2.5 images per second. The frequency of the rows is then equal to: 240 x 2.5 = 600. Choosing a high frequency Fh = 19200 Hz, the number of grey scales will be equal 19200 : 600 = 32. Choosing the high frequency Fh = 38400 the number of grey scales will be 38400 : 000 = 64.

In common the number of grey scales : G = Fh : ( R x Fi ) where " Fh " is the high frequency in Hz, " R " is the number of rows in the upper or lower half of the screen, " Fi is the number of images per second. It is clear, that it should not be chosen more grey scales than pixels on a reasonable length, because it will lead to unnatural distortions.

Bistable liquid crystal displays, like ferroelectric, also become with grey scales, using the now high frequency " SUPERPOSE " method.

The new method of superposing the data voltages with a high frequency, make also the supertwisted liquid crystal faster, because the high frequency shortens the decay time, as it is shown in Fig. 5. Here is shown the dependence of the decay time of a liquid crystal display as a function of the high frequency superposed voltage. So slow mowing pictures can be realized.

Supertwisted liquid crystal displays, as mentioned are rather slow.

To adopt supertwisted liquid crystal displays for moving pictures, a new divisional addressing method was found out. Fig. 6 and Fig. 7, are presented to make clear the new method. Here, the number of all rows is divided in two groups, that we will be called half fields.

The first half field, shown in Fig. 6, comprises all uneven numbers of the rows, means the numbers 1; 3; 5; 7;.. up to 239. They are displayed in the uneven numbers of the columns 1; 3; 5; 7;..up to 639.

The second half field, shown in Fig. 7, comprises the remaining all even numbers of the rows, it is the numbers 2; 4; 6; 8;.... up to 240. They are displayed in the even numbers of the columns 2; 4; 6; 8;.... up to 640. Both fields can be displayed simultaneously.

To avoid any flicker is better to display the second field with a small delay, equal to the half time necessary for displaying one row.

In this case the display looks, as having four time higher image speed. No interrupts cam be observed while objects are moving in the picture.

To affect higher resolution is necessary to display every next image frame in a inversely order, it means to display the uneven numbers of the rows in the even numbers of the columns, and the even numbers of the rows to display in the uneven numbers of the columns.

As a half number of rows last a half time necessary for every image frame, the images can be displayed with a double speed allowing to display moving pictures.

This method allow also to display simultaneously or with a half row time delay a full number of rows in each half field, what will realize a high definition display, with a doubled number of rows during a full image time. For example if each half field will comprise 400 lines, the full image will have a resolution of 800 lines.

This new method was found out especially for supertwisted liquid crystal displays, but it is clear that the method can be very useful for all types of liquid crystal displays having whether passive matrix or active matrix.

A liquid crystal display of the present invention can be used with a color filter for displaying full color pictures. The color filter can be of the mosaic type having red, green and blue pixel elements. Such display will be used in a single layer display for direct view or projection.

A multilayer full color liquid crystal display can be realized using displays of the present invention with color polarizers according to the old subtractive method, or with better colors, using the new eliminative color system. Also in this case, the display can be used for direct view or for projection.

The liquid crystal display of the present invention can also be used in a three beam color system, where three liquid crystal displays of the present invention will be projected through three color filters of the colors: red, green and blue toward a common screen.

**Claims**

1. A matrix liquid crystal display having a steep slope of the electrooptical characteristic, comprising an electronic element for superposing an uninterrupted high frequency voltage of a triangular form and constant amplitude on top of the data voltages of any image, whereby an image with analog type grey scales is displayed.

2. A matrix liquid crystal display as in claim 1, wherein the liquid crystal material having a steep slope is of the type recommended for supertwisted liquid crystal displays, and the aligned twist angle is in the range from 90 degree to 270 degree.

3. A matrix liquid crystal display as in claim 1, comprising a liquid crystal material of the type recommended for twisted nematic liquid crystal displays, wherein every pixel of the said matrix is driven by diode means, causing a steep slope of the electrooptical characteristic.

4. A matrix liquid crystal display as in claim 1, wherein the liquid crystal material comprises a component of ferroelectric liquid crystal material, causing a steep slope.

5. A matrix liquid crystal display, having rows divided in several almost equal groups, where the rows of each group are located with intermissions, in which are located the rows of the subsequent groups in a interlined manner between the rows of the former groups wherein all said groups are energized in a sequential manner, and all said rows are displayed during every image frame time.

6. A matrix liquid crystal display as in claim 5, where said rows are divided in a first and second group, each one of said groups, comprises a half of the whole number of rows and located with intermissions, where said rows of said second group are located in a interlined manner between the rows of said first group, wherein a first group comprising all rows hawing uneven numbers, are energized sequential and displayed in the columns of the uneven numbers during one image frame time, and where the second group comprising all rows having even numbers is displayed in the columns of the even numbers, and are energized sequential and simultaneously with said rows of said first group.

7. A matrix liquid crystal display as in claim 6, wherein during one image frame time, said rows of uneven numbers are displayed in said columns of uneven numbers, and said rows of even numbers are displayed in said columns of even numbers, while during the next image frame time, said rows of uneven numbers are displayed in said columns of even numbers and said rows of even numbers are displayed in said columns of uneven numbers.

8. A matrix liquid crystal display as in claim 7, wherein said rows of said second group is energized in a interlined manner between said rows of said first group, but with a small delay, equal to a half time interval between energizing of two rows.

9. A matrix liquid crystal display as in claim 1, comprising a layer of a " R G B" color filter applied to any surface of said matrix liquid crystal display whereby a multicolor or a full color display with an analog type of grey scales is obtained

10. A matrix liquid crystal display as in claim 5, comprising a layer of a "R G B" color filter applied to any surface of said matrix liquid crystal display, whereby a high speed high resolution multicolor or full color display is obtained.

11. A matrix liquid crystal display as in claim 1, assembled as a multilayer liquid crystal device, comprising at least two liquid crystal displays assembled in series together with neutral and color polarizers, where the eliminative or subtractive color system are used, whereby multicolor or full color images with analog type grey scales for direct view or projection is obtained.

12. A matrix liquid crystal display as in claim 5, assembled as a multilayer liquid crystal device, comprising at least two liquid crystal displays, assembled in series together with neutral and color polarizers, wherein the eliminative or subtractive color system are used, whereby a multicolor or full color high speed high resolution display for direct view or projection is obtained.

**13.** A matrix liquid crystal display as in claim 1, assembled as a multibeam projection device, comprising three liquid crystal displays, wherein each of said liquid crystal displays is projected separately and independently through a different color filter selected from the three primary colors: red, green and blue, toward a common screen, whereby a multicolor or a full color three beam projection system with an analog type of gray scales is obtained.

**14.** A matrix liquid crystal display as in claim 5, assembled as a multibeam projection device, comprising three said liquid crystal displays, wherein each of said liquid crystal displays is projected separately and independently through a different color filter selected from the three primary colors: red, green and blue, toward a common screen, whereby a multicolor or full color three beam projection system of high speed and high resolution is obtained.

**15.** A matrix liquid crystal display as in claim 1, wherein said electronic element is a operational amplifier.

FIG. 1

FIG. 2

FIG. 3

FIG. 4

FIG. 5

FIG. 6

FIG. 7

X - X - SLOPE AXIS
LT - LIGHT TRANSMISSION
V - VOLTAGE
Hf - HIGH FREQUENCY

## DOCUMENTS CONSIDERED TO BE RELEVANT

EP 92104610.8

| Category | Citation of document with indication, where appropriate, of relevant passages | Relevant to claim | CLASSIFICATION OF THE APPLICATION (Int. Cl.5) |
|---|---|---|---|
| X | GB - A - 2 217 089 (THORN EMI) * Page 1, line 21 - page 5, line 16; page 6, line 8 - page 12, line 4 * | 1,2,9 | G 09 G 3/36 G 02 F 1/1347 G 02 F 1/1335 |
| Y | | 11,13 | |
| A | | 3,5,10 | |
| | -- | | |
| Y | US - A - 4 917 465 (CONNER et al.) * Abstract; fig. 12 * | 11 | |
| | -- | | |
| D,Y | US - A - 4 368 963 (STOLOV) * Fig. 1,3 * | 13 | |
| | ---- | | |

TECHNICAL FIELDS SEARCHED (Int. Cl.5)

G 02 F 1/00
G 09 G 3/00

The present search report has been drawn up for all claims

| Place of search | Date of completion of the search | Examiner |
|---|---|---|
| VIENNA | 11-06-1992 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)